Europäisches Patentamt

European Patent Office

Office européen des brevets

(19)

(11) Veröffentlichungsnummer: **0 371 966 B1**

# EUROPÄISCHE PATENTSCHRIFT

(12)

(45) Veröffentlichungstag der Patentschrift:
**17.04.91 Patentblatt 91/16**

(51) Int. Cl.$^5$: **B60C 23/04, G01L 9/00**

(21) Anmeldenummer: **88903185.2**

(22) Anmeldetag: **22.04.88**

(86) Internationale Anmeldenummer:
**PCT/DE88/00241**

(87) Internationale Veröffentlichungsnummer:
**WO 89/00511 26.01.89 Gazette 89/03**

(54) **REIFENDRUCKSENSOR FÜR KRAFTFAHRZEUGE.**

(30) Priorität: **16.07.87 DE 3723510**

(43) Veröffentlichungstag der Anmeldung:
**13.06.90 Patentblatt 90/24**

(45) Bekanntmachung des Hinweises auf die
Patenterteilung:
**17.04.91 Patentblatt 91/16**

(84) Benannte Vertragsstaaten:
**DE FR GB IT SE**

(56) Entgegenhaltungen:
**EP-A- 0 157 205**
**DE-A- 3 243 854**
**FR-A- 2 351 399**
**FR-A- 2 385 090**

(73) Patentinhaber: **ROBERT BOSCH GMBH**
**Postfach 50**
**W-7000 Stuttgart 1 (DE)**

(72) Erfinder: **BURKARD, Johannes**
**Pillenreuther Stra e 86**
**W-8500 Nürnberg 40 (DE)**
Erfinder: **HETTICH, Gerhard**
**Martin-Renz-Stra e 8**
**W-8501 Dietenhofen (DE)**
Erfinder: **SCHMID, Hans-Dieter**
**Kamenzerstra e 8**
**W-8500 Nürnberg 60 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Reifendrucksensor für Kraftfahrzeuge nach der Gattung des Patentanspruchs 1.

Bei einem solchen bekannten Reifendrucksensor (DE-A-3 234 854) ist ein vom Reifendruck zu betätigendes Schaltorgan aus einer Referenzdruckkammer gebildet, die zum Reifen hin durch eine elektrisch leitende Membran abgeschlossen ist und einen mitten im Boden der Referenzdruckkammer isoliert durchgeführten Kontaktstift trägt, an dem durch eine bestimmte Membrandurchbiegung bei ausreichendem Luftdruck im Reifen eine mittlere Kontaktzone der Membran zum Schließen eines Schwingkreises anliegt.

Darüber hinaus ist es aus der EP-A-0 157 205 bekannt, zwei derartige Reifendrucksensoren mit unterschiedlichen Schwellwerten zur Reifendrucküberwachung an der Radfelge in Umfangsrichtung nebeneinander zu befestigen. Durch die unterschiedlichen Schwellwerte soll erreicht werden, daß bei Fahrzeugen, für die an den Vorderrädern und an den Hinterrädern unterschiedliche Reifendrücke vorgesehen sind, ein Austauschen der Räder zwischen Vorder- und Hinterachse jederzeit möglich ist, ohne gleichzeitig auch die Drucksensoren austauschen zu müssen. Die zwei Schwellwerte sind jeweils auf die zwei unterschiedlichen Reifendrücke eingestellt.

Mit einer derartigen Lösung läßt sich ggf. auch gleichzeitig an den Reifen mit dem geringeren geforderten Reifendruck ein Überdruck im Reifen ermitteln und anzeigen, bei dem der Fahrkomfort und ggf. das Fahrverhalten des Fahrzeugs durch die verringerte Auflage des Reifens auf der Fahrbahn beeinträchtigt wird. Eine solche Überwachung der Reifen gegen Überdruck ist jedoch dort bei den mit höherem Druck gefüllten Reifen nicht möglich. Außerdem kann bei den bekannten Lösungen dieser Art die richtige Funktion des Reifendrucksensors nach dem Einbau an der Felge kaum überwacht werden. So ist es beispielsweise möglich, daß beim Reifenwechsel die Membran des Reifendrucksensors oder eine davor angeordnete Schutzkappe eingedrückt und dadurch die Schaltfunktion der Membran blockiert wird. In solchen Fällen wird bei der Reifendrucküberwachung ein ausreichender Luftdruck im Reifen auch dann angezeigt, wenn der Luftdruck unter dem Schwellwert des Reifendrucksensors liegt.

Mit der vorliegenden Lösung wird angestrebt, die Möglichkeit zu schaffen, auf einfache Weise an einem Reifendrucksensor das Blockieren der Membran des Sensors durch mechanische Beschädigung sowie die Einhaltung des erforderlichen Luftdrucks im Reifen zwischen zwei Schwellwerten zu überwachen.

### Vorteile der Erfindung

Die erfindungsgemäße Ausbildung des Reifendrucksensors mit den kennzeichnenden Merkmalen des Hauptanspruchs hat den Vorteil, daß auf einfache Weise mindestens ein weiteres Schaltorgan für den Reifendruck in den Reifendrucksensor mit eingesetzt wird, das gemeinsam mit dem ersten Schaltorgan durch die Membran des Reifendrucksensors bei unterschiedlichen Werten des Reifendrucks betätigt wird. Dadurch lassen sich Schaltschwellen für unterschiedliche Reifendrücke an den Vorder- und Hinterrädern des Kraftfahrzeuges in einem Reifendrucksensor realisieren. Ebensogut läßt sich ein solcher Reifendrucksensor aber auch zur Überwachung des Reifendrucks im Hinblick auf verschiedene Grenzen z. B. auf eine Obergrenze und eine Untergrenze überwachen. Schließlich ist es durch diese Lösung auch noch ohne weiteres möglich, ein Blockieren der Membrane durch mechanische Beschädigungen nach dem Einbau an der Felge, z. B. bei der Reifenmontage dadurch festzustellen, daß der Reifen auf den vorgeschriebenen Luftdruck gefüllt wird, die elektronische Reifendruck-Überwachung jedoch dann einen Überdruck anzeigt, da beide Schaltorgane des Reifendrucksensors durch die Membranverformung geschlossen sind

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist es, das zweite Schaltorgan durch einen weiteren Kontaktstift zu realisieren, der mit dem in der Mitte der Referenzdruckkammer angeordneten ersten Kontaktstift von diesem isoliert in einer gemeinsamen Durchfürung im Boden der Referenzdruckkammer befestigt ist. Diese Lösung erfordert keine zusätzlichen Arbeitsgänge bei der Herstellung des Reifendrucksensors, da beide Kontaktstifte gemeinsam in die Referenzdruckkammer eingesetzt werden. Außerdem läßt sich die Kontaktanordnung leichter herstellen, wenn das zweite Schaltorgan aus einem ringförmigen Kontaktkörper besteht, der um das vordere Ende des mittleren Kontaktstiftes herumgeführt ist. Zweckmäßigerweise ist dabei ein hülsenförmiger Kontaktkörper koaxial zu dem mittleren Kontaktstift angeordnet.

### Zeichnung

Ausführungsbeispiele der Erfindung sind in der Zeichnung dargestellt und in der nachfolgenden Beschreibung näher erläutert. Es zeigen Figur 1 einen Querschnitt durch ein Fahrzeugrad mit einem erfindungsgemäßen Reifendrucksensor und der Auswerteschaltung im Blockschaltbild, Figur 2 die schematische Darstellung des erfindungsgemäßen Reifendrucksensors mit zwei Kontaktstiften und dem daran angeschlossenen Schwingkreis a) bei zu geringem Luftdruck, b) bei ausreichendem Luftdruck, c) bei zu hohem Luftdruck im Fahrzeugreifen und Figur 3 zeigt als weiteres Ausführungsbeispiel einen Reifendrucksensor mit einem hülsenförmigen, koaxial zum mittleren Kontaktstift angeordneten Kontaktkörper im Querschnitt.

Beschreibung der Ausführungsbeispiele

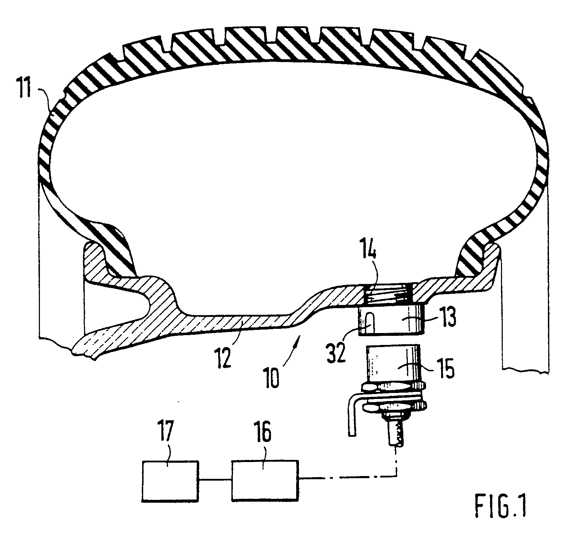

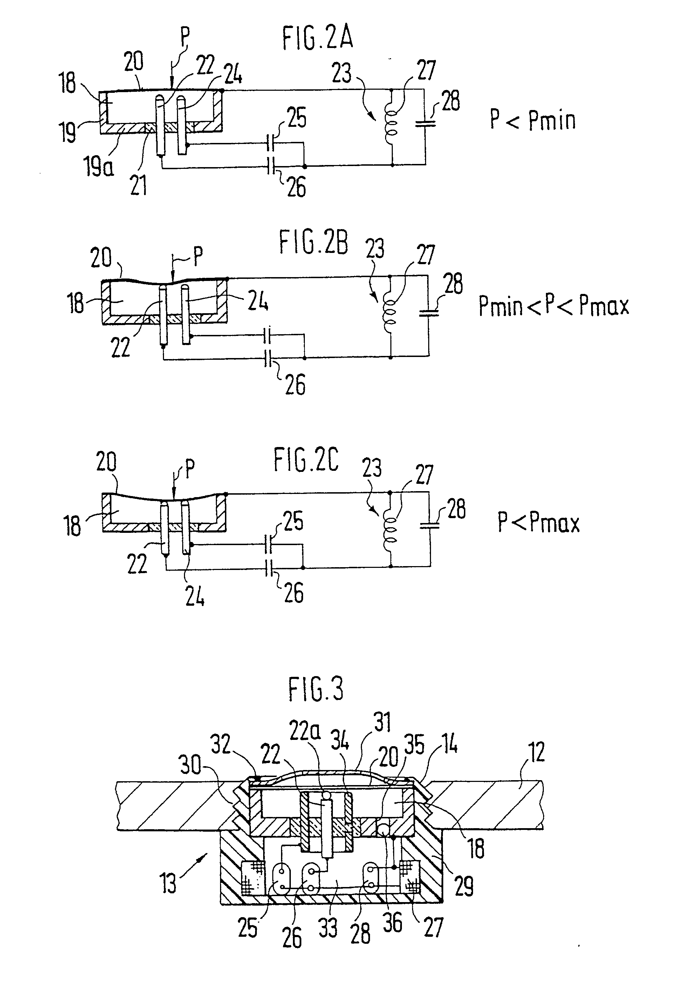

In Figur 1 ist der Ausschnitt eines Kraftfahrzeugrades in verkleinertem Maßstab im Querschnitt dargestellt und mit 10 bezeichnet. Er zeigt einen Reifen 11, der auf einer Radfelge 12 montiert ist. An einem nach innen gerichteten beschnitt der Radfelge 12 ist ein Reifendrucksensor 13 in einer Gewindebohrung 14 der Radfelge eingesetzt. In geringem Abstand dazu ist im Bereich des Reifendrucksensors 13 an der nicht dargestellten Radaufhängung des Fahrzeugs ein Signalaufnehmer 15 befestigt, dessen Stirnseite zum Reifendrucksensor 13 hin gerichtet ist und eine in einer Auswerteschaltung 16 erzeugte hochfrequente Schwingung in den Reifendrucksensor 13 einkoppelt, wenn dieser bei jeder Umdrehung des Fahrzeugrades 10 vorbeikommt. Im Reifendrucksensor 13 ist ein elektrischer Schwingkreis untergebracht, der beim Erreichen eines bestimmten Luftdrucks im Reifen 11 geschlossen wird und dann als Saugkreis die hochfrequente Schwingung am Signalaufnehmer 15 bedämpft. Diese bei umlaufendem Fahrzeugrad 10 entsprechend zyklische Bedämpfung wird in der Auswerteschaltung 16 für jedes Fahrzeugrad überwacht. Beim Ausbleiben oder bei Verringerung der Bedämpfung wird auf einer Anzeige 17 signalisiert, welcher der überwachten Reifen einen zu geringen Luftdruck hat.

Der schematische Aufbau des Reifendrucksensors 13 und seine Funktion wird mit Hilfe der Figur 2 dargestellt und erläutert. Der Reifendrucksensor besteht im wesentlichen aus einer Referenzdruckkammer 18, deren Kammergehäuse 19 aus Stahl zum Reifen hin durch eine elektrisch leitende Membran 20 abgeschlossen ist. Im Gehäuseboden 19a der Referenzdruckkammer 18 ist in der Bodenmitte in einer Durchführung 21 ein erster Kontaktstift 22 elektrisch isoliert angeordnet, der als ein erstes Schaltorgan mit der Membran 20 zusammenwirkt. Der Kontaktstift 22 und die Membran 20 sind innerhalb des Reifendrucksensors mit einem Zweig eines Schwingkreises 23 verbunden, der bei ausreichendem Luftdruck P im Reifen geschlossen wird.

Neben dem mitten im Gehäuseboden 19a der Referenzdruckkammer 18 angeordneten ersten Kontaktstift 22 ist ein weiterer Kontaktstift 24 vom ersten Kontaktstift 22 isoliert in der gemeinsamen Durchführung 21 befestigt. Dieser Kontaktstift 24 bildet mit der Membran 20 ein zweites Schaltorgan, das ebenfalls am Schwingkreis 23 angeschlossen ist und erst bei einer stärkeren Membrandurchbiegung einen weiteren Schwingkreis 23 schließt. Gemäß Figur 2 sind die beiden nebeneinander angeordneten Kontaktstifte 22 und 24 über je einen Kondensator 25, 26 als kapazitive Komponente mit einer gemeinsamen Spule 27 als induktive Komponente zu dem Schwingkreis 23 verschaltet, wobei das andere Ende der Spule 27 mit der Membran 20 verbunden ist. Parallel zur Spule 27 liegt noch ein weiterer Kondensator 28. Dies bedeutet drei Zustände : f1 (beide Schalter offen) > f2 (ein Schalter zu) > f3 (beide Schalter zu).

Da die Referenzdruckkammer 18 des Reifendrucksensors 13 mit einem Gas auf einen vorbestimmten Druck gefüllt ist, muß der von außen wirksame Reifendruck P die Membran 20 gegen den Druck in der Referenzdruckkammer 18 durchwölben. In Figur 2a ist dargestellt, daß bei einem Reifendruck P, der unterhalb eines durch den unteren Schwellwert des Reifendrucksensor 13 vorgegebenen Mindestdruck Pmin liegt, die Membran 20 nicht soweit nach innen durchgewölbt ist, daß sie Kontakt hat zu den Kontaktstiften 22 und 23. Der Schwingkreis 23 wird bei diesem Zustand des Reifendrucksensors 13 (P < Pmin) aus der Spule 27 und den Kondensator 28 gebildet. Die sich daraus ergebende Resonanzfrequenz f1 wird vom Signalaufnehmer 15 und der Auswerteschaltung 16 detektiert. Auf der Anzeige 17 erscheint dadurch ein Hinweis auf zu geringem Luftdruck im Reifen 11 des entsprechenden Rades 10.

In Figur 2b ist die Referenzdruckkammer 18 in einem Zustand dargestellt, der auftritt. wenn der Reifendruck P größer als der durch den unteren Schwellwert vorgegebenen Mindestdruck Pmin aber kleiner als der durch den oberen Schwellwert des Reifendrucksensors 10 vorgegebenen Druckes Pmax ist (Pmin < P < Pmax). Die Membran 20 ist hier gegen den Druck in der Referenzdruckkammer 18 durch den Reifendruck P soweit durchgewölbt, daß sie am mittleren Kontaktstift 22 anliegt und dadurch einen Schaltungszweig schließt, durch den der Kondensator 26 zusätzlich zum Kondensator 28 zu der Spule 27 des Schwingkreises 23 parallel geschaltet wird. Die dabei auftretende Resonanzfrequenz f2 wird nun vom Signalaufnehmer 15 mit der Auswerteschaltung 16 erfaßt und auf der Anzeige 17 wird kenntlich gemacht, daß der überwachte Reifendruck in Ordnung ist.

In Figur 2c ist die Membran 20 der Referenzdruckkammer 18 mit einem Reifendruck P beaufschlagt, der größer ist als der obere Schwellwert Pmax des Reifendrucksensors 13 (P < Pmax). Die Membran 20 ist jetzt soweit durchgewölbt, daß sie sowohl am mittleren Kontaktstift 22 als auch an dem benachbarten Kontaktstift 24 anliegt. Dadurch wird ein weiterer Stromkreis mit dem Kondensator 25 geschlossen, der ebenfalls zur Spule 27 des Schwingkreises 23 parallel geschaltet ist. Dies ergibt eine weitere Resonanzfrequenz f3. Sie wird über den Aufnehmer 15 von der Auswerteschaltung 16 erfaßt und über die Anzeige 17 wird dem Fahrer ein Hinweis auf einen zu hohen Luftdruck im überwachten Reifen 11 gegeben.

Figur 3 zeigt in einem weiteren Ausfürungsbeispiel den Reifendrucksensor 13 eingeschraubt in die Gewindebohrung 14 der Radfelge 12 im Querschnitt. Der Reifendrucksensor 13 besteht aus einem Gehäuse 29, vorzugsweise aus Isolierstoff, mit einem Gewindeansatz 30 zur Befestigung in der Gewindebohrung 14 der Radfelge 12. Das Gehäuse 29 trägt an seiner dem Reifen 11 zugewandten Seite die Referenzdruckkammer 18 mit der Membran 20, die vorn von einer gelochten Abdeckscheibe 31 gegen mechanische Beschädigung geschützt werden soll. Die Abdeckscheibe 31 ist durch einen Bördelrand 32 des Gehäuses 29 vor der Membran 20 befestigt. Im unteren Abschnitt des Sensorgehäuses 29 befindet sich eine Schwingkreiskammer 33 mit der Spule 27 und den Kondensatoren 25, 26 und 28, die in der aus Figur 2 erkennbaren Anordnung miteinander und mit den Schaltorganen des Reifendrucksensors 13 zu einem Schwingkreis 23 verschaltet sind. Der mittlere Kontaktstift 22 ist gemeinsam mit einem hülsenförmigen Kontaktkörper 34 in einer Glasdurchführung 21 im Boden 19a des Kammergehäuses 19 eingeschmolzen. Am vorderen Ende trägt der Kontaktstift 22 eine Kontaktkugel 22a, die durch eine bestimmte Membrandurchbiegung bei ausreichendem Luftdruck im Reifen 11 an einer mittleren Kontaktzone der Membran 20 anliegt und damit einen Zweig des Schwingkreises 23 schließt. Das obere Ende des koaxial um den Kontaktstift 22 angeordneten hülsenförmigen Kontaktkörper 34 ist gegenüber der Kontaktkugel 22a des mittleren Kontaktstiftes 22 etwas zurückgesetzt oder auf gleicher Höhe, so daß die darüberliegende ringförmige Kontaktzone der Membran 20 erst bei einer stärkeren Membrandurchbiegung sich an. diesen Kontaktkörper 34 anlegt und damit einen weiteren Zweig des Schwinkreises 23 schließt. Der hülsenförmige Kontaktkörper 34 ist hier mit dem Kondensator 25 und der mittlere Kontaktstift 22 mit dem Kondensator 26 zur Spule 27 des Schwingkreises 23 parallel geschaltet.

Der untere Schwellwert des Reifendrucksensors 13 wird durch den Druck des in die Referenzdruckkammer 18 über eine Bohrung 35 eingefüllten Gases bestimmt. Die Bohrung wird durch eine Kugel 36 nach dem Einfüllen des Gases druckdicht verschlossen. Die Differenz zwischen dem unteren und oberen Schwellwert des Reifendrucksensors 13 wird hauptsächlich durch den Abstand bestimmt, den die Membrane 20 bei Anlage an der Kontaktkugel 22a des mittleren Kontaktstiftes 22 noch zu dem koaxial dazu angeordneten Kontaktkörper 34 aufweist.

In gleicher Weise, wie zu Figur 2 erläutert, wird auch mit diesem Reifendrucksensor 13 überwacht, ob der Luftdruck im Reifen 11 zwischen den zwei Schaltschwellen des Reifendrucksensors 13 liegt bzw. die untere Schaltschwelle unterschreitet oder die obere Schaltschwelle überschreitet. Neben der Anzeige eines zu geringen Reifendrucks bei einen undichten Reifen ist es auch erwünscht, einen überhöhten Reifendruck zu erkennen, weil dadurch der Reifen geschädigt werden kann bzw. sich seine Eigenschaften verschlechtern.

Außerdem kann durch einen derartigen Reifendrucksensor 13 auf einfache Weise festgestellt werden, ob nach dem Einbau des Reifendrucksensors 13 in die Radfelge 11, z. B. beim Montieren oder beim Auswechseln eines Reifens die Abdeckkappe 31 vor der Membran 20 eingedrückt und die Membran 20 dadurch blockiert worden ist. In diesem Fall liegt die Membran 20 an beiden Kontakten 22, 24 auf und gibt mit Fartbeginn auf der Anzeige 17 einen entsprechenden Hinweis auf einen Sensordefekt bzw. auf Überdruck. Da die Anzeige 17 zwischen einem Sensordefekt und Überdruck nicht unterscheidet, wird der Reifendruck zunächst verringert. Bleibt die Anzeige 17 dabei unverändert, ist die Membran 20 blockiert. Eine aufwendige Überprüfung der Funktion des Reifendrucksensors 13 oder eine optische Kontrolle durch Herausnehmen des Sensors nach jeder Reifenmontage kann so vermieden werden.

Die Erfindung ist nicht auf die dargestellte Ausführungsbeispiele beschränkt. So können im Boden der Referenzdruckkammer getrennte Durchführungen für jedes Schaltorgan gewählt werden. Der hülsenförmige Kontaktkörper kann aus einem Rohrabschnitt oder einem gebogenen Blechstreifen hergestellt sein. Er kann auch als Stift ausgebilbet sein, der unterhalb der Membran einen Kontaktring trägt. Außerdem können auch mehrere Kontaktkörper mit unterschiedlichen Abständen zur Membran um den mittleren Kontaktstift herum angeordnet sein, die unterschiedliche Schwellwerte abfühlen und weitere Stromkreise schließen. Ferner ist es im Rahmen der Erfindung möglich, anstelle eines Schwingkreises mit dem zu den Schaltorganen in Reihe liegenden Kondensatoren die Schaltorgane an Abgriffe der Induktionsspule anzuschließen.

## Ansprüche

1. Reifendrucksensor (13) für Kraftfahrzeuge mit einem am Umfang der Radfelge (12) zu befestigenden, vom Reifendruck zu betätigenden Schaltorgan aus einer Referenzdruckkammer (18), die zum Reifen hin durch eine elektrisch leitende Membran (20) abgeschlsosen ist und einen mitten im Boden (19a) der Referenzdruckkammer (18) isoliert durchgeführten Kontaktstift (22) trägt, an dem durch eine bestimmte Membrandurchbiegung bei ausreichendem Luftdruck im Reifen (11) eine mittlere Kontaktzone der Membran (20) zum Schließen eines Schwingkreises (23) anliegt, dadurch gekennzeichnet, daß neben dem mitten im Boden (19a) der Referenzdruckkammer (18) befestigten Kontaktstift (22) mindestens ein zusätzlicher Kontaktkörper (24, 34) isoliert in einer gemeinsamen Durchführung (21) befestigt ist, der erst bei einer stärkeren Membrandurchbiegung als zur Berührung des in der Mitte der Referenzdruckkammer (18) angeordneten Kontaktstiftes (22) erforderlich, einen weiteren Stromkreis über eine benachbarte Kontaktzone der Membran (20) schließt.

2. Reifendrucksensor nach Anspruch 1, dadurch gekennzeichnet, daß der Kontaktträger (24) als weiterer Kontaktstift ausgebildet ist.

3. Reifendrucksensor nach Anspruch 1, dadurch gekennzeichnet, daß der Kontaktkörper (34) ringförmig um mindestens das vordere Ende des mittleren Kontaktstiftes (22) herumgeführt ist.

4. Reifendrucksensor nach Anspruch 3, dadurch gekennzeichnet, daß der Kontaktkörper (34) hülsenförmig koaxial um den mittleren Kontaktstift (22) angeordnet ist.

5. Reifendrucksensor nach einem der Ansprüche 1 bis 4, dadurch gekennzeichnet, daß der mittlere Kontaktstift (22) und der daneben angeordnete Kontaktkörper (23, 34) über je eine kapazitive Komponente (25, 26) mit einer gemeinsamen induktiven Komponente (27) zu einem Schwingkreis (23) verschaltet ist, wobei das andere Ende der induktiven Komponente (27) mit der Membran (20) verbunden ist.

6. Reifendrucksensor nach Anspruch 5, dadurch gekennzeichnet, daß eine weitere kapazitive Komponente (28) unmittelbar zur induktiven Komponente (27) des Schwingkreises (23) parallel geschaltet ist.

## Claims

1. Tyre-pressure sensor (13) for motor vehicles, having a switching member which is to be fixed to the periphery of the wheel rim (12) and is to be actuated by the tyre pressure and consists of a reference-pressure chamber (18) which is closed off towards the tyre by an electrically conductive diaphragm (20) and carries a contact pin (22) fed through in an insulated manner centrally in the base (19a) of the reference-pressure chamber (18), against which contact pin (22), due to a certain deflection of the diaphragm at adequate air pressure in the tyre (11) a centre contact zone of the diaphragm (20) bears for closing an oscillating circuit (23), characterised in that at least one additional contact body (24, 34) is fixed in an insulated manner in a common feed-through bushing (21) next to the contact pin (22) fixed centrally in the base (19a) of the reference-pressure chamber (18), which contact body (24, 34) closes a further electric circuit via an adjacent contact zone of the diaphragm (20) only when there is a greater deflection of the diaphragm than necessary for contacting the contact pin (22) arranged in the centre of the reference-pressure chamber (18).

2. Tyre-pressure sensor according to Claim 1, characterised in that the contact carrier (24) is designed as a further contact pin.

3. Tyre-pressure sensor according to Claim 1, characterised in that the contact body (34) is passed in an annular manner around at least the front end of the centre contact pin (22).

4. Tyre-pressure sensor according to Claim 3, characterised in that the contact body (34) is arranged in a sleeve shape coaxially around the centre contact pin (22).

5. Tyre-pressure sensor according to one of Claims 1 to 4, characterised in that the centre contact pin (22) and the contact body (23, 34) [sic] arranged next to it are each wired via a capacitive component (25, 26) to a common inductive component (27) to form an oscillating circuit (23), the other end of the inductive component (27) being connected to the diaphragm (20).

6. Tyre-pressure sensor according to Claim 5, characterised in that a further capacitive component (28) is connected directly in parallel with the inductive component (27) of the oscillating circuit (23).

## Revendications

1. Détecteur de pression (13) pour véhicules automobiles comportant un organe de commutation fixé à la périphérie de la jante (12) et actionné par la pression du pneu, cet organe se composant une chambre de pression de référence (18) fermée du côté du pneu par une membrane conductrice d'électricité (20) et portant une tige de contact (22) traversant de manière isolée le milieu du fond (19a) de la chambre de pression de référence (18), tige contre laquelle s'applique pour une flexion de la membrane correspondant à une pression d'air suffisante dans le pneu (11), une zone de contact médiane de la membrane (20) pour former un circuit oscillant (23), détecteur caractérisé en ce qu'à côté de la tige de contact (22) fixée au fond (19a) de la chambre de référence de pression (18), il est prévu au moins un organe de contact (24, 34) supplémentaire, isolé, fixé dans un passage commun (21) et qui pour une flexion plus importante de la membrane que celle de la tige de contact (22) prévue au milieu de la chambre de référence (18), on ferme un autre circuit électrique par une zone de contact voisine de la membrane (20).

2. Détecteur de pression de pneu selon la revendication 1, caractérisé en ce que le support de contact (24) est constitué par une autre tige de contact.

3. Détecteur de pression de pneu selon la revendication 1, caractérisé en ce que l'organe de contact (34) est de forme annulaire et au moins autour de l'extrémité avant de la tige de contact médiane (22).

4. Détecteur de pression selon la revendication 3, caractérisé en ce que l'organe de contact (34) est prévu en forme de douille coaxialement autour de la tige de contact médiane (22).

5. Détecteur de pression selon l'une des revendications 1 à 4, caractérisé en ce que la tige de contact (22), médiane et l'organe de contact juxtaposé (23, 34) sont reliés par un composant capacitif (25, 26) respectif à un composant inductif (27) commun pour former un circuit oscillant (23) et l'autre extrémité du composant inductif (27) est reliée à la membrane (20).

6. Détecteur de pression selon la revendication 5, caractérisé par un autre composant capacitif (28) branché en parallèle directement sur le composant inductif (27) du circuit oscillant (23).

FIG.1

## FIG.2A

P < Pmin

## FIG.2B

Pmin < P < Pmax

## FIG.2C

P < Pmax

## FIG.3